# EUROPEAN PATENT APPLICATION

(11) **EP 2 103 210 A2**
(43) Date of publication of application: **23.09.2009**
(21) Application number: 09155434.5
(22) Date of filing: 18.03.2009
(51) Int. Cl.: A01M 23/08

(54) **Autonomous cage for the capture of birds**

(30) Priority: 19.03.2008 ES 200800577
(71) Applicant: Ruiz Ambel, Xavier, 17007 Girona (ES)
(72) Inventor: Ruiz Ambel, Xavier, 17007 Girona (ES)
(74) Representative: Pons Ariño, Angel

(57) **Abstract**

The present invention relates to a cage for the capture of birds, preferably intended for its installation in urban areas wherein it is necessary to control the population of certain birds, such as, for example, pigeons.

The object of the invention consists of a cage which can be easily transported and assembled, which functions autonomously and which permits the practical and secure transfer of the captured birds.

## Description

### OBJECT OF THE INVENTION

The present invention relates to a cage for the capture of birds, preferably intended for its installation in urban areas wherein it is necessary to control the population of certain birds, such as, for example, pigeons.

The object of the invention consists of a cage which can be easily transported and assembled, which functions autonomously and which permits the practical and secure transfer of the captured birds.

### BACKGROUND OF THE INVENTION

Currently, there are several known capture systems of live animals and birds for their control. These systems are based on cages of small and medium dimensions, with a small entrance, whether at the front and upper, or small at the base.

There are also capture systems with nets, manual or automatic, with the problem of shooting and the human presence for actuation and collection. These systems feature a capture of a small number of birds and a very assiduous maintenance at the capture area. The drawback is that as there is so much human presence at the place of capture, the birds or animals get scared and do not pass through said place.

Given that the birds and animals must be controlled in places that are difficult to access, in abandoned places, even in buildings in ruins, the current capture systems feature difficulties for their transport, assembly and maintenance. It must be borne in mind that the captured animals can by confined in the cage for long periods of time, until they are collected and transferred, so they must be fed regularly and autonomously without depending on the electrical grid.

### DESCRIPTION OF THE INVENTION

The autonomous cage for the capture of birds proposed by the invention, resolves the previously stated problem, as it permits the transfer and assembly of the cage in a simple and practical manner and with an autonomous maintenance.

To do this, and more specifically, the autonomous cage for the capture of birds is made up of an externally closing modular structure equipped with an access door for the maintenance personnel, a hopper for the supply of feed, as well as a series of openings for the entrance of the birds to be captured, the openings whereof having a non-return means, characterized in that the modular structure is made up of tubular plug-in bars from its ends, whereon is mounted a flexible net for the external closing of the structure, the device having been provided with removable collection and transport modules for the captured birds, which attaches to the entrance openings.

The removable collection and transport module for the captured birds is made up of a parallelipede structure of rectangular configuration, equipped with two laterally opposed openings, both provided with closing lock gates duly articulated from the upper ends of the removable module.

The hopper for the supply of feed to the captured birds is actuated with rechargeable batteries by means of a photovoltaic solar panel, installed on the exterior of the cage.

The non-return means is made up of a frame which connects to the entrance opening for the birds and is provided with dividing partitions which define a plurality of access passages to the interior, between whose partitions is disposed an upside-down, folded U-shaped rod and hanging from the upper part allowing it to swing about its horizontal span, having been provided that the vertical spans slightly exceed the frame so that they can only swing inwards.

The cage has an acoustic decoy system of the species to be captured.

The openings for the entrance of the birds have lock gates to close said openings and prevent the birds from escaping during the collection and transport process thereof.

Said openings for the entrance of the birds are disposed at the base of the cage, above which is disposed the hopper, so that the supply of feed is partially distributed outside of the cage.

### DESCRIPTION OF THE DRAWING

In order to complete the description being carried out, and with the object of helping towards a better understanding of the characteristics of the invention, in accordance with a preferred example of practical embodiment thereof, a set of drawings is attached as an integral part of said description, wherein the following, in an illustrative and non-limitative character, has been represented:

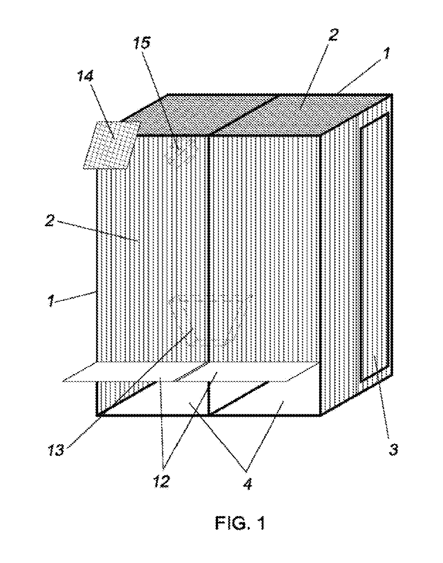

Figure 1 shows a perspective view of the cage wherein its modular structure, the solar panel and the acoustic decoy can be observed,

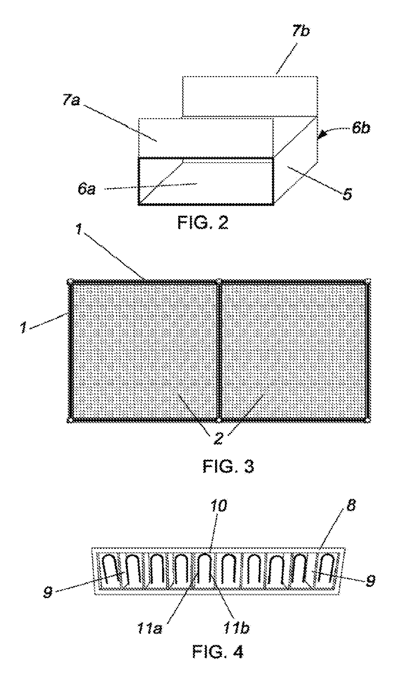

Figure 2 shows a perspective view of the collection and transport module.
Figure 3 shows a plan view of the cage wherein the arrangement of the tubular plug-in bars can be observed.
Figure 4 shows a front view of the frame which connects to the entrance openings of the cage.

### PREFERRED EMBODIMENT OF THE INVENTION

In light of the figures shown, it can be observed how the autonomous cage for the capture of birds is made up of a modular structure produced from tubular plug-in bars (1) from its ends, whereon is mounted a flexible net (2) for the exterior closing of the structure.

The structure of the cage is provided with an access door (3) for the personnel in charge of maintenance, as well as for the collection and transport of the captured birds.

The size of the cage is variable, as desired by the installer depending on its location, the difficulty of its installation and the species of bird to be captured. Thanks to its modular configuration based on tubular bars (1) and the use of the flexible net (2), it can be easily transported folded up until it arrives at the place of its installation.

For the capture of the birds, the cage has entrance openings (4), preferably disposed at the base the structure of the cage, provided with a removable collection and transport module (5) of the birds, as well as non-return means, which we will explain below.

Said removable module (5) for the collection and transport of the captured birds is made up of a parallelipede structure of rectangular configuration, equipped with two laterally opposing openings (6a, 6b), both provided with closing lock gates (7a, 7b) articulated from the upper ends of the removable module (5) configuring a type of tunnel.

The removable modules (5) interiorly fit into the entrance openings (4) making them coincide with the opening (6a), and with the duly open lock gates (7a, 7b) configuring a type of access tunnel to the interior of the cage for the entrance of the birds.

In order to prevent the exit of the birds in the cage, it has non-return means consisting of a frame (8) which connects to the entrance opening (4) of the cage, and therefore, coinciding with the opening (6a) of the removable module (5), the frame whereof being provided with a series of dividing partitions (9) which define a plurality of access passages to the interior, between whose dividing partitions (9) is disposed an upside-down, folded U-shaped rod (10), hanging from the upper part, allowing it to swing about its horizontal span. In order to prevent the birds from going backwards, making the upside-down, folded U-shaped rod swing outwards, the vertical spans (11a, 11b) thereof, slightly exceed the frame (8), preventing their exit.

On the other hand, in order to prevent the exit of the birds when the removable modules (5) are being withdrawn by the maintenance personnel, the cage has lock gates (12) to close the entrance openings (4).

The feeding of the captured birds is carried out by means of a hopper (13) for the supply of feed which can be programmed at a time and dosage. The operation of said hopper (13) is actuated by batteries, not represented in the drawings, rechargeable by means of a photovoltaic solar panel (14) installed on the exterior of the cage. Thanks to the arrangement of these batteries and solar panel (14), the cage will have autonomy for the operation of the hopper (13) without needing a connection to the electrical grid.

In order to facilitate the approach and capture of the birds, the cage has an acoustic decoy system (15) of the species to be captured.

On the other hand, in order to bring about the entrance of the birds to the interior of the cage, through the entrance openings (4), it has been provided that the feed hopper (13) is disposed above the openings so that the feed is partially distributed outside of the cage. In this way, the birds approach the entrance openings (4) attracted by the feed that has fallen outside of the cage, and end up entering to continue eating the feed that is inside the cage. Once inside, the upside-down U-shaped rods (10) prevent them from being able to exit.

For the collection and transport of the captured birds, in the first place, the operator must close the lock gates (12) of the cage. Upon detecting human presence, the captured birds head for the entrance point, entering the removable modules (5) via the openings (6b), when the operator closes the lock gates (7b) so that they are trapped therein, removes the non-return frames (8) and closes the lock gates (7a). In this way we now have the captured birds confined inside the removable modules (5), ready to be collected and transported.

From this moment on, one only has to substitute the removable modules (5) with other empty ones, insert the non-return frames (8) and open the lock gates (12) so that the capture cage is operative once again.

## Claims

1. Autonomous cage for the capture of birds made up of an externally closing modular structure equipped with an access door (3) for the maintenance personnel, a hopper (13) for the supply of feed, as well as a series of openings (4) for the entrance of the birds to be captured, the openings whereof having a non-return means, **characterized in that** the modular structure is made up of tubular plug-in bars from its ends (1), whereon is mounted a flexible net (2) for the external closing of the structure, the device having been provided with removable collection and transport modules (5) for the captured birds, which attaches to the entrance openings (4).

2. Autonomous cage for the capture of birds, according to claim 1, **characterized in that** the removable collection and transport module (5) for the captured birds is made up of a parallelipede structure of rectangular configuration, equipped with two laterally opposed openings (6a, 6b), both provided with closing lock gates (7a, 7b) dully articulated from the upper ends of the removable module (5).

3. Autonomous cage for the capture of birds, according to claim 1, **characterized in that** the hopper (13) for the supply of feed to the captured birds is actuated with rechargeable batteries by means of a photovoltaic solar panel (14), installed on the exterior of the cage.

4. Autonomous cage for the capture of birds, according to claim 1, **characterized in that** the non-return means is made up of a frame (8) which connects to the entrance opening (4) for the birds, provided with dividing partitions (9) which define a plurality of access passages to the interior, between whose partitions (9) is disposed an upside-down, folded U-shaped rod (10) and hanging from the upper part allowing it to swing about its horizontal span, having been provided that the vertical spans (11 a, 11b) slightly exceed the frame (8) so that they can only swing inwards.

5. Autonomous cage for the capture of birds, according to claim 1, **characterized in that** the cage has an acoustic decoy system (15) of the species to be captured.

6. Autonomous cage for the capture of birds, according to claim 1, **characterized in that** the openings (4) for the entrance of the birds have lock gates (12) to close said openings (4) and prevent the birds from escaping during the collection and transport process thereof.

7. Autonomous cage for the capture of birds, according to claim 1, **characterized in that** the openings (4) for the entrance of the birds are disposed at the base of the cage, above which is disposed the hopper (13) so that the supply of feed is partially distributed outside of the cage.
